# EUROPÄISCHE PATENTSCHRIFT

(11) **EP 3 850 249 B1**
(45) Veröffentlichungstag und Bekanntmachung des Hinweises auf die Patenterteilung: **23.08.2023**
(21) Anmeldenummer: 19762943.9
(22) Anmeldetag: 02.09.2019
(51) Int. Cl.: F16J 9/02, F16J 9/20, F02F 3/00

(54) **KOLBENRING UND KOLBEN MIT INNENLIEGENDER NUTVERSIEGELUNG**
PISTON RING AND PISTON WITH INTERNAL GROOVE SEALING
SEGMENT DE PISTON ET PISTON À SCELLEMENT INTÉRIEUR DE RAINURE

(30) Priorität: 12.09.2018 DE 102018122258
(43) Veröffentlichungstag der Anmeldung: 21.07.2021
(73) Patentinhaber: Federal-Mogul Burscheid GmbH, 51399 Burscheid (DE)
(72) Erfinder: MITTLER, Richard, 51399 Burscheid (DE); RUCH, Fabian, 51375 Leverkusen (DE)
(74) Vertreter: Kurig, Thomas
(86) Internationale Anmeldenummer: PCT/EP2019/073343
(87) Internationale Veröffentlichungsnummer: WO 2020/053017

(56) Entgegenhaltungen:
- BE-A- 466 088
- DE-A1- 2 429 977
- US-A- 3 834 719
- US-A- 5 695 199
- US-A1- 2017 321 627

## Beschreibung

### Gebiet der Erfindung

Die vorliegende Erfindung betrifft einen Kolbenring für Verbrennungsmotoren, insbesondere einen Kompressionskolbenring, und einen mit diesem zusammenwirkenden Kolben, die in einer Kolbenringnut innenliegend, angepasst aneinander ausgestaltet sind, um die Abdichtwirkung an der oberen Flanke zu verbessern.

### Stand der Technik

Während der Verbrennung des Kraftstoffes entsteht ein hoher Druck, der bewirken kann, dass Gas an den Kolbenringen vorbei als sogenannter Blow-By aus der Brennkammer in das Kurbelgehäuse gelangt. Insbesondere der Kolbenring in der obersten Kolbennut soll dies durch Kontakt mit der Kolbennut unterbinden; ein solcher Kolbenring wird auch als Kompressionskolbenring bezeichnet.

Als Kompressionskolbenringe werden hauptsächlich im Wesentlichen rechteckige Ringe verwendet, die als besonders robust gelten. Auch werden hierfür Trapezringe verwendet, die geringfügig von der Rechteckform abweichen, dergestalt, dass ihre axiale Höhe innen etwas kleiner ist als außen, und die durch eine mit der Radialbewegung des Kolbenrings relativ zum Kolben verbundene Veränderung des Axialspiels Ölkohle kontinuierlich freischlagen und so den Aufbau Ölkohle verringern. Trapezringe werden in Nuten verwendet, die an die Trapezform des Ringes angepasst sind, d.h. die ebenfalls trapezförmig sind.

Um Kolbenringen einen sogenannten Twist zu geben, werden Querschnittsschwächungen, wie z.B. Innenfasen, angebracht. Dadurch wird eine gezielte, aber um den Umfang unterschiedliche, Kontaktsituation in der Nut erzeugt und das Anlageverhalten an der Nut verändert.

Dokument US 3 834 719 A offenbart eine Kolbenbodenanordnung mit einer Ringnut, die einen Ring mit im Wesentlichen L-förmigem Querschnitt trägt, um den Ausstoß des schädlichen Autoabgases zu unterdrücken und die Leistung des Motors zu erhöhen. Eine Seite des Rings hat eine Verschleißfläche, während die anderen Seiten des Rings abgeschrägt sind, um einen Gaszugang zu der Rückseite des Rings zu ermöglichen. Die ringförmige Nut hat passende Flächen, wodurch ein Haften des Kolbenrings am Kolbenboden verhindert und übermäßiger Verschleiß reduziert wird.

DE 24 29 977 A1 offenbart eine Kolben- und Abstreifringanordnung, die sich in einem Zylinder verschiebt, wobei der Kolben zumindest eine einen Abstreifring aufnehmende Nut aufweist. An einer unmittelbar der dem Kurbelgehäuse entgegengesetzten Abstreiflippe des Abstreifringes benachbarten Stelle ist ein Hohlraum in dem Kolben angeordnet, damit er einen Vorrat ohne Ausgang für eine einer Anziehungskraft in Richtung auf den oberen Totpunkt unterworfenen Flüssigkeit bildet und mit der genannten Abstreiflippe des Abstreifringes und dem Zylinder mit Hilfe einer Ölauffanglippe, die in der Nähe der Abstreiflippe und des Zylinders angeordnet ist, zusammenarbeitet, wobei der Hohlraum direkt mit dem Kurbelgehäuse durch den Abstand zwischen den benachbarten Flächen des Abstreifringes und der Nut auf der Seite des oberen Totpunktes in Verbindung steht. Dadurch wird der durch den am oberen Totpunkt abgelagerten Öl Wulst entstehende Ölverlust weitgehend beseitigt.

BE 466 088 A offenbart einen Kolben für druckbeaufschlagte Fluidmaschinen (d.h. für Verbrennungsmotoren oder für Kolbenkompressoren) und insbesondere Kolben, deren gesamter Boden oder Hauptteil - Bodenkappe aus einer Leichtmetalllegierung gegossen ist. Der Kolbenkörper kann aus einer Leichtmetalllegierung oder aus Stahl hergestellt sein. Hauptgegenstand der vorliegenden Erfindung ist eine verbesserte Dichtungsvorrichtung, die zwar in erster Linie dazu dient, den Kolbenboden gegen Gasdruck abzudichten, die aber auch zur Abdichtung gegen Gas und Öl dienen kann.

Ziel der vorliegenden Erfindung ist es, einen Kolbenring bereitzustellen, bei dem einerseits der Aufbau von Ölkohle möglichst verhindert wird und andererseits während des Betriebs stets eine wohldefinierte Kontaktsituation sowohl an der Nut als auch an der Zylinderlaufbahn vorliegt, um insgesamt Blow-By zu verhindern.

### Zusammenfassung der Erfindung

Die Aufgabe wird erfindungsgemäß gelöst durch eine Kolbenring- und Kolben-Kombination umfassend einen Kolbenring mit einer Lauffläche, einer Innenfläche, einer unteren Ringflanke und einer oberen Ringflanke, wobei sich am Übergang zwischen Innenfläche und oberer Ringflanke eine über den Umfang verlaufende Aussparung in Form eines Innenwinkels befindet, wobei die Aussparung eine konische erste Oberfläche und eine konische zweite Oberfläche am Kolbenring definiert, wobei die erste Oberfläche, in Radialrichtung gesehen, weiter außen und, in Axialrichtung gesehen, weiter oben liegt als die zweite Oberfläche, wobei in einem axialen Querschnitt ein erster Winkel zwischen der Axialrichtung und der ersten Oberfläche im Bereich zwischen 10° und 50° liegt und ein zweiter Winkel zwischen der Radialrichtung und der zweiten Oberfläche im Bereich zwischen 5° und 30° liegt, und einen Kolben, aufweisend eine Kolbenringnut mit einem Nutgrund und einer unteren Nutflanke, wobei an einem oberen Ende des Nutgrunds der Kolbenringnut ein Vorsprung angeordnet ist, wobei der Vorsprung eine konische erste Vorsprungoberfläche und eine konische zweite Vorsprungoberfläche aufweist, wobei die erste Vorsprungoberfläche, in Radialrichtung gesehen, weiter außen und, in Axialrichtung gesehen, weiter oben liegt als die zweite Vorsprungoberfläche, wobei in einem axialen Querschnitt ein Winkel zwischen der Axialrichtung und der ersten Vorsprungoberfläche im Bereich zwischen 10° und 50° liegt und ein Winkel zwischen der Radialrichtung und der zweiten Vorsprungoberfläche im Bereich zwischen 5° und 30° liegt, wobei die Aussparung und der Vorsprung so eingerichtet sind, dass, wenn der Kolbenring in der Kolbenringnut montiert ist, der Vorsprung in die Aussparung hineinragt, die zweite Oberfläche parallel zur zweiten Vorsprungoberfläche verläuft, und die erste Oberfläche parallel zur ersten Vorsprungoberfläche verläuft oder der erste Winkel zwischen der Axialrichtung und der ersten Oberfläche größer ist als der dritte Winkel zwischen der Axialrichtung und der ersten Vorsprungoberfläche, wobei, wenn der Kolbenring in der Kolbenringnut montiert ist und die zweite Oberfläche an der zweiten Vorsprungoberfläche anliegt, ein axialer Abstand zwischen der ersten Oberfläche und der ersten Vorsprungoberfläche besteht, und wobei die Kolbenringnut weiterhin eine obere Nutflanke umfasst, und wobei, wenn der Kolbenring in der Kolbenringnut montiert ist und die zweite Oberfläche an der zweiten Vorsprungoberfläche anliegt, ein axialer Abstand zwischen oberer Ringflanke und oberer Nutflanke besteht.

Gemäß einem Aspekt der Kolbenring- und Kolben-Kombination kann, wenn der Kolbenring in der Kolbenringnut montiert ist und der Kolbenring an der unteren Nutflanke anliegt, die erste Oberfläche von der Vorsprungoberfläche beabstandet sein und die zweite Oberfläche von der zweiten Vorsprungoberfläche beabstandet sein.

Gemäß einem weiteren Aspekt beträgt der axiale Abstand mindestens 45 µm.

Gemäß einem weiteren Aspekt liegt der axiale Abstand im Bereich 0,9 - 1,5 mal dem axialen Abstand zwischen der ersten Oberfläche und der ersten Vorsprungoberfläche.

Gemäß einem weiteren Aspekt kann eine innere Randlinie der ersten Oberfläche einen größeren Radius aufweisen als eine innere Randlinie der ersten Vorsprungoberfläche.

Gemäß einem weiteren Aspekt kann die Differenz der Radien von innerer Randlinie der ersten Oberfläche und innerer Randlinie der ersten Vorsprungoberfläche im Bereich von 15 µm bis 300 µm liegen.

Gemäß einem weiteren Aspekt kann die erste Oberfläche, die zweite Oberfläche, die erste Vorsprungoberfläche und die zweite Vorsprungoberfläche mit einer Verschleißschutzbeschichtung versehen sein.

Gemäß einem weiteren Aspekt kann die Kolbenringnut an einem oberen Ende des Kolbens gelegen sein und an einem Kolbenboden des Kolbens oben offen sein.

Gemäß einem weiteren Aspekt der vorliegenden Erfindung kann im axialen Querschnitt ein Winkel zwischen der ersten Oberfläche und der zweiten Oberfläche im Bereich zwischen 105° und 150° liegen.

Gemäß einem weiteren Aspekt kann eine axiale Höhe des Kolbenrings im Bereich 0,25 - 2 mal einer radialen Wandstärke des Kolbenrings liegen, wobei eine axiale Gesamthöhe der Aussparung im Bereich 0,5 - 0,7 mal der Höhe des Kolbenrings liegt; und wobei eine radiale Gesamttiefe der Aussparung im Bereich 0,2 - 0,7 (vorzugsweise 0,25 - 0,5) mal der Wandstärke des Kolbenrings liegt.

Gemäß einem weiteren Aspekt können die erste Oberfläche und die zweite Oberfläche mittels einer Abrundung ineinander übergehen, wobei ein Krümmungsradius der Abrundung bevorzugt im Bereich 0,25 - 1 mal der Summe aus axialer Gesamthöhe der Aussparung und radialer Gesamttiefe der Aussparung liegt.

Gemäß einem weiteren Aspekt kann mindestens eine der ersten Oberfläche oder der zweiten Oberfläche mit einer Verschleißschutzschicht ersehen sein.

Gemäß einem weiteren Aspekt kann die obere Ringflanke mit einer Verschleißschutzbeschichtung versehen sein.

Gemäß einem weiteren Aspekt des Kolbens kann mindestens eine der ersten Vorsprungoberfläche oder der zweiten Vorsprungoberfläche mit einer Verschleißschutzbeschichtung versehen sein.

'Axial' und 'radial' werden wie üblich durch Bezug auf die durch Kolbenring gegebene Achse, die mit der Achse der Zylinderform des Kolbens zusammenfällt, definiert. Eine axiale Richtung (Axialrichtung) ist eine Richtung parallel zu dieser Achse und eine radiale Richtung (Radialrichtung) ist eine Richtung senkrecht zu dieser Achse. Ein axialer Schnitt ist ein Schnitt, bei dem diese Achse in der Schnittebene liegt; ein axialer Schnitt wird im Folgenden auch als Querschnitt bezeichnet. Bezüglich der axialen Anordnung bedeutet 'oben' brennraumseitig und 'unten' kurbelgehäuseseitig. "Innen" und "außen" sind auf die Achse des Kolbenrings/Kolbens bezogen, in radialer Richtung gesehen.

### Kurze Beschreibung der Zeichnung

Im Folgenden werden beispielhafte Ausführungsformen der Erfindung unter Bezug auf die Figuren genauer beschrieben, wobei
Fig. 1 eine Querschnittsansicht eines erfindungsgemäßen Kolbenrings zeigt;
Fig. 2 eine Querschnittsansicht eines erfindungsgemäßen Kolbenrings mit eingetragenen Maßen zeigt;
Fig. 3 eine Querschnittsansicht eines in einen Kolben eingebauten Kolbenrings gemäß der Erfindung zeigt;
Fig. 4a und Fig. 4b Querschnittsansichten eines in einen Kolben eingebauten Kolbenrings während unterschiedlicher Betriebszustände zeigt;
Fig. 5 eine Querschnittsansicht eines in einen Kolben eingebauten Kolbenrings in einem Zustand zeigt, in dem der Kolbenring an dem am Nutgrund angeordneten Vorsprung anliegt;
Fig. 6a und Fig. 6b Ausführungsbeispiele mit Verschleißschutzbeschichtungen zeigen; und
Fig. 7 eine Querschnittsansicht eines Teils eines erfindungsgemäßen Kolbens zeigt.

Im Folgenden werden sowohl in der Beschreibung als auch in der Zeichnung gleiche Bezugszeichen für gleiche oder ähnliche Elemente oder Komponenten verwendet. Es ist zudem eine Bezugszeichenliste angegeben, die für alle Figuren gültig ist. Die in den Figuren dargestellten Ausführungen sind lediglich schematisch und stellen nicht notwendigerweise die tatsächlichen Größenverhältnisse dar.

### Ausführliche Beschreibung der Erfindung

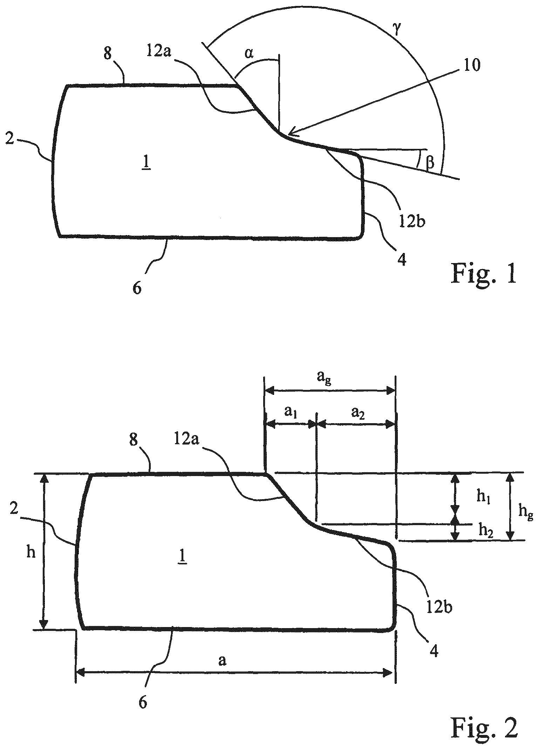

Fig. 1 und Fig. 2 stellen einen erfindungsgemäßen Kolbenring 1 in einer Querschnittsansicht dar, wobei in Fig. 1 Winkel eingetragen sind und in Fig. 2 Abmessungen eingetragen sind. Der Kolbenring 1 weist eine (radial außenliegende) Lauffläche 2, eine der Lauffläche gegenüberliegende Innenfläche 4, eine untere (kurbelraumseitig gelegene) Ringflanke 6 und eine obere (brennraumseitig gelegene) Ringflanke 8 auf. Am Übergang von der Innenfläche 4 zur oberen Ringflanke 8 (d.h. in einem innen- und obenliegenden Bereich des Kolbenrings) befindet sich eine Aussparung bzw. Ausnehmung 10. Die obere Ringflanke 8 und die untere Ringflanke 6 sind bevorzugt parallel zueinander. Die Lauffläche ist bevorzugt abgerundet bzw. ballig (im englischen Sprachgebrauch "barrel-shaped") ausgebildet; sie kann jedoch auch geradlinig (im Querschnitt) verlaufen, etwa senkrecht zu den Ringflanken oder leicht schräg dazu, wie bei einem Minutenring, ebenso kann die Lauffläche ähnlich ein Nasenring oder einem Nasen-Minutenring gestaltet sein. Die Kolbenringe gemäß der vorliegenden Erfindung sind bevorzugt einteilig. Die Aussparung erstreckt sich über den gesamten Umfang.

Die Aussparung 10 liegt im Wesentlichen (d.h. Kanten bzw. Übergänge zwischen den Oberflächen und zwischen den Oberflächen und Innenfläche bzw. oberer Nutflanke können geringfügig davon abweichen, z.B. abgerundet oder mit einer Fase versehen sein) in Form eines Innenwinkels vor (genau genommen besteht der Innenwinkel im Querschnitt). Durch die Aussparung 10 sind zwei konische (kegelstumpfförmige) Oberflächen 12a, 12b definiert, die sozusagen die Grenzfläche, zumindest wesentliche (d.h. abgesehen von den Übergängen zwischen den beiden Oberflächen und absehen von den Übergängen zwischen den beiden Oberflächen und Innenfläche bzw. oberer Nutflanke des Kolbenrings) Anteile davon, des Kolbenringkörpers an der Ausnehmung/Aussparung 10 bilden. Diese beiden konischen Oberflächen werden als erste Oberfläche 12a und zweite Oberfläche 12b bezeichnet, wobei die erste Oberfläche 12a radial weiter außen liegt als die zweite Oberfläche 12b und die erste Oberfläche 12a axial weiter oben liegt als die zweite Oberfläche 12b. Anmerkung: Dem Fachmann ist klar, dass der Kolbenring typischerweise einen Ringstoß aufweist, an welchem die konischen Oberflächen unterbrochen sind, gleiches gilt für die weiteren ring- und kreisförmigen Strukturen des Kolbenrings; entsprechende Strukturen erstrecken sich dann also über den gesamten Umfang mit Ausnahme des Ringstoßes.

Der Kolbenring umfasst also im Querschnitt in Radialrichtung drei Abschnitte: einen inneren halbtrapezförmigen Abschnitt, einen mittleren halbtrapezförmigen Abschnitt und einen äußeren im Wesentlichen rechteckigen (gemäß den in den Figuren dargestellten bevorzugten Ausführungsformen) Abschnitt. "Halbtrapezform" soll hier ein entlang einer Linie senkrecht zu den beiden parallelen Seiten halbiertes gleichschenkliges (symmetrisches) Trapez bezeichnen, d.h. beim Halbtrapez werden die zwei parallelen Seiten durch eine Seite verbunden, die zu diesen beiden Seiten senkrecht steht, während die vierte Seite in einem von 90° verschiedenen Winkel zu den parallelen Seiten (ein solches Trapez wird auch als sogenanntes Rechtwinkliges Trapez bezeichnet). "Im Wesentlichen rechteckig" soll wieder heißen, dass der äußere Abschnitt an der Lauffläche von der reinen Rechteckform etwas abweichen kann, z.B. eine ballige Lauffläche oder eine schräge Lauffläche (ähnlich einem Minutenring), auch eine Gestaltung ähnlich einem Nasenring oder Minuten-Nasenring ist denkbar. Die schrägen Seiten der Halbtrapezformen des inneren und des mittleren Abschnitts sind jeweils oben angeordnet und bilden über den Umfang betrachtet die erste und die zweite Oberfläche. Die diesen schrägen Seiten gegenüberliegenden Seiten liegen zusammen mit einer Seite des äußeren Abschnitts auf einer Linie, die über Umfang betrachtet die untere Ringflanke bildet.

Die Winkel, die, in einem axialen Querschnitt, von der ersten und zweiten Oberfläche 12a, 12b mit der Axial- bzw. Radialrichtung gebildet werden sind wie folgt eingeschränkt: ein erster Winkel α zwischen der Axialrichtung und der ersten Oberfläche 12a liegt im Bereich zwischen 10° und 50° und ein zweiter Winkel β zwischen der Radialrichtung und der zweiten Oberfläche (12b) liegt im Bereich zwischen 5° und 30°. Bevorzugt liegt der erste Winkel α im Bereich zwischen 20° und 40°; unabhängig davon liegt der zweite Winkel β bevorzugt im Bereich zwischen 10° und 20°. Insgesamt sollte eine axiale Höhe des Kolbenrings im Bereich der Aussparung bevorzugt monoton, weiter bevorzugt streng monoton, und stetig abnehmen.

Gemäß einer bevorzugten Ausführungsform liegt ein Winkel γ, der, wieder im Querschnitt, zwischen der ersten Oberfläche 12a und der zweiten Oberfläche 12b gebildet wird, im Bereich zwischen 105° und 150°, bevorzugt zwischen 115° und 140°, weiter bevorzugt zwischen 125° und 135°.

In Fig. 2 sind verschiedene Abmessungen, die sich auf die Aussparung 10 beziehen, eingetragen. Insbesondere eine axiale Höhe h₁ der ersten Oberfläche 12a und eine axiale Höhe h₂ der zweiten Oberfläche 12b, die in der Summe im Wesentlichen eine axiale Gesamthöhe h_{g} der Aussparung 10 ergeben. Weiterhin sind eine radiale Tiefe ai der ersten Oberfläche 12a und eine radiale Tiefe a₂ der zweiten Oberfläche 12b eingetragen, die in der Summe im Wesentlichen eine radiale Gesamttiefe h_{g} der Aussparung 10 ergeben. "Im Wesentlichen" bezieht sich darauf, dass es zu geringen Abweichungen aufgrund von abgerundeten/abgeschrägten Übergängen zwischen den einzelnen Oberflächen kommen kann, d.h. die Summen der Höhen/Tiefen der ersten und zweiten Oberflächen können gegebenenfalls etwas kleiner, z.B. 10% oder 20%, als die Gesamthöhe bzw. Gesamttiefe der Aussparung sein, welche sich auf die Gesamtabmessungen der Aussparung beziehen sollen.

Bevorzugt liegt eine axiale Höhe h des Kolbenrings 1 im Bereich 0,25 - 2 mal einer radialen Wandstärke a des Kolbenrings 1, wobei die axiale Gesamthöhe h_{g} der Aussparung 10 im Bereich 0,5 - 0,7 mal der Höhe h des Kolbenrings 1 liegt und wobei die radiale Gesamttiefe a_{g} der Aussparung 10 im Bereich 0,2 - 0,7, vorzugsweise 0,25 - 0,5, mal der Wandstärke a des Kolbenrings 1 liegt.

Gemäß einer Ausführungsform grenzen die erste Oberfläche 12a und die zweite Oberfläche 12b aneinander. Gemäß einer anderen bevorzugten Ausführungsform gehen die erste Oberfläche 12a und die zweite Oberfläche 12b mittels einer Abrundung ineinander über, wobei ein Krümmungsradius der Abrundung bevorzugt im Bereich 0,25 - 1, weiter bevorzugt im Bereich 0,25 - 0,4, mal der Summe aus axialer Gesamthöhe h_{g} der Aussparung 10 und radialer Gesamttiefe a_{g} der Aussparung 10 liegt.

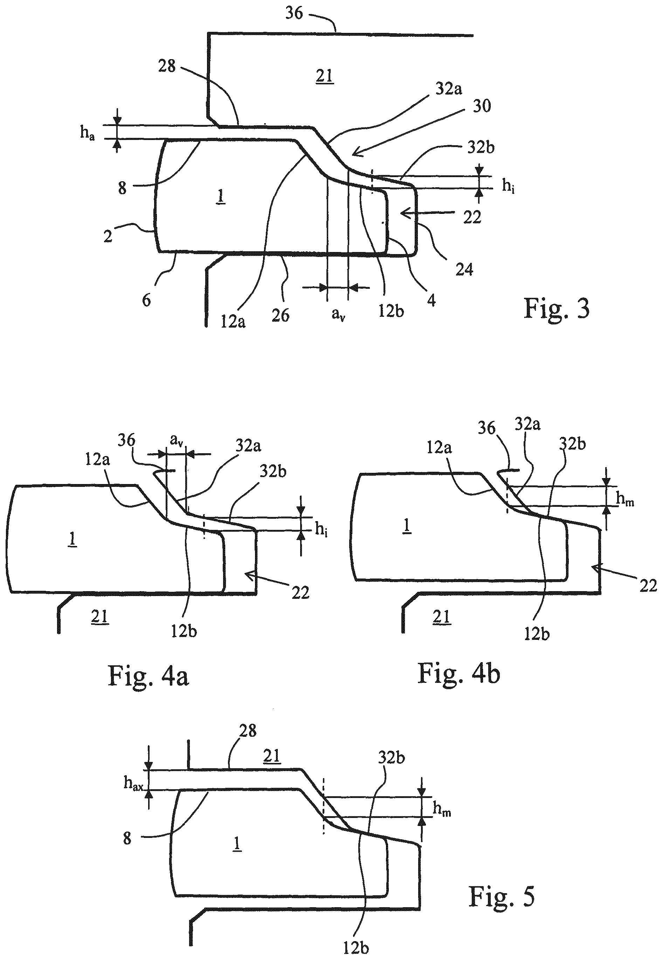

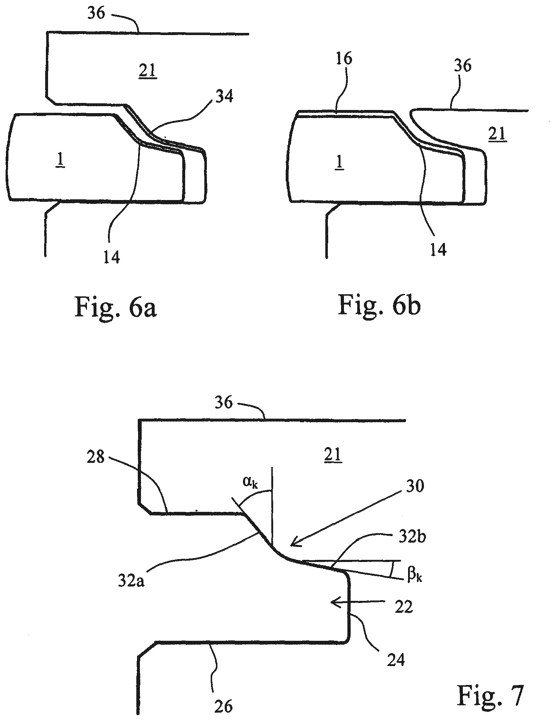

Fig. 3 stellt, in einer Querschnittsansicht, den Kolbenring 1 in eine Kolbenringnut 22 eines erfindungsgemäßen Kolben 21 (der nur teilweise dargestellt ist) montiert bzw. eingebaut dar. Der Kolben 21, der in Fig. 7 ohne Kolbenring dargestellt ist, weist eine Kolbenringnut 22 mit einem Nutgrund 24 und einer unteren Nutflanke 26 auf. An einem oberen Ende des Nutgrunds 24 ist ein Vorsprung 30 angeordnet, der über den Umfang verläuft. Der Vorsprung 30 weist zwei konische Oberflächen 32a, 32b auf, die als erste Vorsprungoberfläche 32a und zweite Vorsprungoberfläche 32b bezeichnet werden. Hierbei gilt, dass die erste Vorsprungoberfläche 32a (radial) weiter außen und (axial) weiter oben liegt als die zweite Vorsprungoberfläche 32b. Weiterhin ist vorgesehen, dass, in einem axialen Querschnitt, ein dritter Winkel αₖ zwischen der Axialrichtung und der ersten Vorsprungoberfläche 32a im Bereich zwischen 10° und 50°, bevorzugt zwischen 20° und 40°, liegt und ein vierter Winkel βₖ zwischen der Radialrichtung und der zweiten Vorsprungoberfläche 12b im Bereich zwischen 5° und 30°, bevorzugt zwischen 10° und 20°, liegt.

Gemäß einer Ausführungsform grenzen die erste und die zweite Vorsprungoberfläche 32a, 32b aneinander. Gemäß einer anderen bevorzugten Ausführungsform ist der Übergang zwischen der ersten und der zweiten Vorsprungoberfläche 32a, 32b abgerundet gestaltet, d.h. die erste und die zweite Vorsprungoberfläche 32a, 32b gehen mittels einer Abrundung ineinander über.

Weiterhin kann die Kolbenringnut 22 eine obere Nutflanke 28 aufweisen, wie in Fig. 3 dargestellt. Es ist jedoch auch eine oben an einem Kolbenboden 36 offene Kolbenringnut 22 möglich (siehe die Figuren 4a, 4b und 6b), wobei dann der Kolbenring 1 durch den Vorsprung 30 in der Kolbenringnut 22 gehalten wird. Kolbenboden bezeichnet hier die brennraumseitig gelegene Oberfläche des Kolbens, die also mit den Verbrennungsgasen direkt in Kontakt steht (auch als Feuerstegoberseite bezeichnet).

Erfindungsgemäß ist gemäß einer Ausführungsform vorgesehen, Kolbenring 1 und Kolben 21 in einer Kolbenring-Kolben-Kombination angepasst aneinander zu kombinieren, siehe Fig. 3. Eine solche Kombination umfasst also einen Kolbenring 1 und einen Kolben 21, jeweils wie vorstehend beschrieben, die dergestalt aneinander angepasst sind, dass die Aussparung 10 und der Vorsprung 30 so eingerichtet sind, dass, wenn der Kolbenring 1 in der Kolbenringnut 22 montiert ist, der Vorsprung 30 in die Aussparung 10 hineinragt und die zweite Oberfläche 12b parallel zur zweiten Vorsprungoberfläche 32b verläuft und die erste Oberfläche 12a parallel zur ersten Vorsprungoberfläche 32a verläuft oder der erste Winkel α zwischen der Axialrichtung und der ersten Oberfläche 12a größer ist als der dritte Winkel αₖ zwischen der Axialrichtung und der ersten Vorsprungoberfläche 32a. Anderes ausgedrückt ragt also der Vorsprung 30 in die Aussparung 10 hinein, der zweite Winkel β ist gleich dem vierten Winkel βₖ und der erste Winkel α ist größer oder gleich (bevorzugt gleich) dem dritten Winkel αₖ. Falls, wie oben beschrieben, die erste und die zweite Oberfläche mittels einer Abrundung ineinander übergehen und auch die erste und die zweite Vorsprungoberfläche mittels einer Abrundung ineinander übergehen, sollte der Krümmungsradius der Abrundung des Übergangs erste/zweite Oberfläche kleiner oder gleich dem Krümmungsradius der Abrundung des Übergangs erste/zweite Vorsprungoberfläche sein, bevorzug sind die Krümmungsradien gleich.

Vorzugsweise besteht zwischen Kolbenring 1 und Kolben 21 ein Spiel in axialer Richtung (und auch in radialer Richtung). Dabei ist bei einem Kolben mit oben nicht offener Kolbenringnut 22 (wie in Fig. 3), wenn der Kolbenring 1 an der unteren Nutflanke 26 anliegt, bevorzugt ein axialer Abstand hₐ zwischen oberer Kolbenringflanke 8 und oberer Nutflanke 8 um mindestens 20 µm größer als ein axialer Abstand hᵢ zwischen zweiter Oberfläche 12b und zweiter Vorsprungoberfläche 32b.

Bevorzugt liegt der innere Rand der ersten Oberfläche des Kolbenrings (radial) weiter außen als der innere Rand der ersten Vorsprungoberfläche des Kolbens. D.h. bevorzugt weist eine innere Randlinie der ersten Oberfläche 12a einen größeren Radius auf als eine innere Randlinie der ersten Vorsprungoberfläche 32a. Die Randlinie bezeichnet hier den radial innengelegenen Rand der konischen Oberfläche bzw. konischen Vorsprungoberfläche und verläuft entsprechend über den gesamten Umfang, so dass im Wesentlichen (außer am Ringstoß) ein Kreis gebildet wird, dessen Radius definiert ist; der Radius entspricht also dem radialen Abstand der jeweiligen Randlinie von der Achse des Kolbenrings. Falls die erste und die zweite Oberfläche 12a, 12b bzw. die erste und die zweite Vorsprungoberfläche 32a, 32b aneinandergrenzen, entsprechen die Randlinien den jeweiligen Grenzlinien.

Der radiale Abstand aᵥ zwischen den beiden Randlinien liegt bevorzugt im Bereich von 15 µm bis 300 µm, weiter bevorzugt im Bereich von 50 µm bis 200 µm, noch weiter bevorzugt im Bereich von 100 µm bis 150 µm. Dieser Abstand aᵥ entspricht der Differenz der Radien von innerer Randlinie der ersten Oberfläche 12a und innerer Randlinie der ersten Vorsprungoberfläche 32a.

In den im Folgenden beschriebenen Figuren 4a, 4b, 5, 6a und 6b, die verschiedene Ausführungen von Kolbenring-Kolben-Kombinationen in einer Querschnittsansicht darstellen und in denen der Kolben jeweils nur teilweise dargestellt ist, sind der Übersichtlichkeit wegen nicht alle Bezugszeichen eingetragen, sondern nur die für die Beschreibung wesentlichen. So nicht gesondert erwähnt gilt weiterhin das vorstehend in Verbindung mit den Figuren 1-3 Gesagte.

Fig. 4a und Fig. 4b stellen Querschnittsansichten eines in einen Kolben 21 eingebauten Kolbenrings 1 während unterschiedlicher Betriebszustände dar. Hierbei ist die Kolbenringnut 22 beispielsweise am oberen Ende des Kolbens 21 angeordnet und am Kolbenboden 36 offen ausgeführt; der Kolbenring 1 wird durch den am Nutgrund angeordneten Vorsprung in der Kolbenringnut 22 gehalten und der Druck der Verbrennungsgase wirkt direkt auf die obere Ringflanke 8.

In Fig. 4a liegt der Kolbenring 1 an der unteren Nutflanke an. Auch hier sind wieder der, in Zusammenhang mit Fig. 3 erwähnte, axiale Abstand hᵢ zwischen zweiter Oberfläche 12b und zweiter Vorsprungoberfläche 32b und der radiale Abstand aᵥ zwischen den inneren Randlinien von erster Oberfläche 12a und erster Vorsprungoberfläche 32a eingezeichnet.

In Fig. 4b ist der Kolbenring 1 in einem Betriebszustand gezeigt, in dem er sich relativ zum Kolben 21 nach oben bewegt hat und am Vorsprung anliegt, d.h. die zweite Oberfläche 12b liegt an der zweiten Vorsprungoberfläche 32b an. Aufgrund des radialen Abstands aᵥ zwischen den inneren Randlinien von erster Oberfläche 12a und erster Vorsprungoberfläche 32a und aufgrund der Winkelgestaltung, bei welcher unter anderem die erste Oberfläche 12a und erste Vorsprungoberfläche 32a, die weiter außen liegen, in Radialrichtung gesehen in einem steileren Winkel verlaufen als die inneren zweite Oberfläche 12b und zweite Vorsprungoberfläche 32b, die weiter innen liegen, besteht der Kontakt zwischen Kolbenring 1 und Vorsprung lediglich an der zweiten Oberfläche 12b und der zweiten Vorsprungoberfläche 32b. Da diese Flächen ähnlich einem üblichen Trapezring gestaltet sind, wird hier der Aufbau von Ölkohle unterbunden. Weiter wird durch diesen Kontakt der durch die Aussparung auftretende Ring-Twist reduziert bzw. aufgehoben, so dass die Lauffläche in genau definierter, gewünschter Weise, z.B. mit einem gewünschten Balligkeitskontakt, an der Zylinderlauffläche anliegt.

Zwischen der ersten Oberfläche 12a und der ersten Vorsprungoberfläche 32a besteht auch in dem in Fig. 4b gezeigten Betriebszustand ein Abstand hₘ, so dass dort ein Freiraum besteht, in den Gase gelangen können, die den Kolbenring 1 nach außen an die Zylinderlauffläche drücken. Bevorzugt beträgt dieser axiale Abstand hₘ zwischen der ersten Oberfläche 12a und der ersten Vorsprungoberfläche 32a mindestens 45 µm (wenn die zweite Oberfläche 12b an der zweiten Vorsprungoberfläche 32b anliegt).

Fig. 5 ist ein Kolbenring 1 eingebaut in eine oben nicht offene Kolbenringnut 22 eines Kolbens 21 und in einem Zustand dargestellt, in dem der Kolbenring 1 am Vorsprung anliegt, d.h. die zweite Oberfläche 12b liegt an der zweiten Vorsprungoberfläche 32b an. Fig. 5 entspricht also der Fig. 4b, Fig. 4a hat ihre Entsprechung in Fig. 3. Dementsprechend gilt hier auch das in Zusammenhang mit Fig. 4a und Fig. 4b Gesagte, mit Ausnahme der nicht offenen Ausgestaltung der Kolbenringnut.

Im in Fig. 5 gezeigten Betriebszustand besteht bevorzugt ein axialer Abstand hₐₓ zwischen oberer Ringflanke 8 und oberer Nutflanke 28. Dies ermöglicht es, dass Gase in den Freiraum zwischen erster Oberfläche 12a und erster Vorsprungoberfläche 32a gelangen können. Dieser axiale Abstand hₐₓ liegt bevorzugt im Bereich 0,9 - 1,5 mal dem axialen Abstand hₘ zwischen der ersten Oberfläche 12a und der ersten Vorsprungoberfläche 32a, wenn die zweite Oberfläche 12b an der zweiten Vorsprungoberfläche 32b anliegt.

Weiterhin können sowohl der Kolbenring als auch der Kolben unabhängig voneinander an geeigneten Stellen mit einer Verschleißschutzbeschichtung versehen sein, wie in Fig. 6a (mit oben beispielsweise nicht offener Kolbenringnut) und Fig. 6b (mit oben beispielsweise offener Kolbenringnut) dargestellt. Am Kolbenring 1 wird eine Verschleißschutzbeschichtung 14, 16 bevorzugt an der ersten und/oder der zweiten Oberfläche 12a, 12b oder auch an der oberen Ringflanke 8 angebracht (Fig. 6b). Am Kolben 21 wird eine Verschleißschutzbeschichtung 34 bevorzugt am Vorsprung 30, d.h. an der ersten und/oder der zweiten Vorsprungoberfläche 32a, 32b angebracht. Besonders bevorzugt ist es (Fig. 6a), sowohl die erste und die zweite Oberfläche 12a, 12b als auch den Vorsprung 30 mit einer Verschleißschutzbeschichtung zu versehen.

### Bezugszeichenliste

- 1: Kolbenring
- 2: Lauffläche
- 4: Innenfläche
- 6: untere Ringflanke
- 8: obere Ringflanke
- 10: Aussparung
- 12a: erste Oberfläche
- 12b: zweite Oberfläche
- 14: Verschleißschutzbeschichtung erste/zweite Oberfläche
- 16: Verschleißschutzbeschichtung obere Ringflanke
- 21: Kolben
- 22: Kolbenringnut
- 24: Nutgrund
- 26: untere Nutflanke
- 28: obere Nutflanke
- 30: Vorsprung
- 32a: erste Vorsprungoberfläche
- 32b: zweite Vorsprungoberfläche
- 34: Verschleißschutzbeschichtung Vorsprung
- 36: Kolbenboden

## Patentansprüche

1. Kolbenring- und Kolben-Kombination umfassend
einen Kolbenring (1) mit einer Lauffläche (2), einer Innenfläche (4), einer unteren Ringflanke (6) und einer oberen Ringflanke (8);
wobei sich am Übergang zwischen Innenfläche (4) und oberer Ringflanke (8) eine über den Umfang erstreckende Aussparung (10) in Form eines Innenwinkels befindet;
wobei die Aussparung (10) eine konische erste Oberfläche (12a) und eine konische zweite Oberfläche (12b) am Kolbenring (1) definiert, wobei die erste Oberfläche (12a), in Radialrichtung gesehen, weiter außen und, in Axialrichtung gesehen, weiter oben liegt als die zweite Oberfläche (12b);
wobei in einem axialen Querschnitt ein erster Winkel (α) zwischen der Axialrichtung und der ersten Oberfläche (12a) im Bereich zwischen 10° und 50° liegt und ein zweiter Winkel (β) zwischen der Radialrichtung und der zweiten Oberfläche (12b) im Bereich zwischen 5° und 30° liegt,
einen Kolben (21) aufweisend eine Kolbenringnut (22) mit einem Nutgrund (24) und einer unteren Nutflanke (26), wobei an einem oberen Ende des Nutgrunds (24) der Kolbenringnut (22) ein Vorsprung (30) angeordnet ist;
wobei der Vorsprung (30) eine konische erste Vorsprungoberfläche (32a) und eine konische zweite Vorsprungoberfläche (32b) aufweist, wobei die erste Vorsprungoberfläche (32a), in Radialrichtung gesehen, weiter außen und, in Axialrichtung gesehen, weiter oben liegt als die zweite Vorsprungoberfläche (32b),
wobei in einem axialen Querschnitt ein dritter Winkel (αₖ) zwischen der Axialrichtung und der ersten Vorsprungoberfläche (32a) im Bereich zwischen 10° und 50° liegt und ein vierter Winkel (βₖ) zwischen der Radialrichtung und der zweiten Vorsprungoberfläche (12b) im Bereich zwischen 5° und 30° liegt;
wobei die Aussparung (10) und der Vorsprung (30) so eingerichtet sind, dass, wenn der Kolbenring (1) in der Kolbenringnut (22) montiert ist, der Vorsprung (30) in die Aussparung (10) hineinragt, die zweite Oberfläche (12b) parallel zur zweiten Vorsprungoberfläche (32b) verläuft, und die erste Oberfläche (12a) parallel zur ersten Vorsprungoberfläche (32a) verläuft oder der erste Winkel (α) zwischen der Axialrichtung und der ersten Oberfläche (12a) größer ist als der dritte Winkel (αₖ) zwischen der Axialrichtung und der ersten Vorsprungoberfläche (32a), wobei, wenn der Kolbenring (1) in der Kolbenringnut (22) montiert ist und die zweite Oberfläche (12b) an der zweiten Vorsprungoberfläche (32b) anliegt, ein axialer Abstand (hₘ) zwischen der ersten Oberfläche (12a) und der ersten Vorsprungoberfläche (32a) besteht, und wobei die Kolbenringnut (22) weiterhin eine obere Nutflanke (28) umfasst,
**dadurch gekennzeichnet, dass**, wenn der Kolbenring (1) in der Kolbenringnut (22) montiert ist und die zweite Oberfläche (12b) an der zweiten Vorsprungoberfläche (32b) anliegt, ein axialer Abstand (hₐₓ) zwischen oberer Ringflanke (8) und oberer Nutflanke (28) besteht.

2. Kolbenring- und Kolben-Kombination gemäß Anspruch 1, wobei, wenn der Kolbenring (1) in der Kolbenringnut (22) montiert ist und der Kolbenring (1) an der unteren Nutflanke (26) anliegt, die erste Oberfläche (12a) von der Vorsprungoberfläche (32a) beabstandet ist und die zweite Oberfläche (12b) von der zweiten Vorsprungoberfläche (32b) beabstandet sind.

3. Kolbenring- und Kolben-Kombination gemäß einem der Ansprüche 1 oder 2, wobei, der axiale Abstand (hₘ) mindestens 45 µm beträgt.

4. Kolbenring- und Kolben-Kombination gemäß Anspruch 3, wobei der axiale Abstand (hₐₓ) im Bereich 0,9 - 1,5 mal dem axialen Abstand (hₘ) zwischen der ersten Oberfläche (12a) und der ersten Vorsprungoberfläche (32a) liegt.

5. Kolbenring- und Kolben-Kombination gemäß einem der Ansprüche 1-4, wobei eine innere Randlinie der ersten Oberfläche (12a) einen größeren Radius aufweist als eine innere Randlinie der ersten Vorsprungoberfläche (32a).

6. Kolbenring- und Kolben-Kombination gemäß Anspruch 5, wobei die Differenz (aᵥ) der Radien von innerer Randlinie der ersten Oberfläche (12a) und innerer Randlinie der ersten Vorsprungoberfläche (32a) im Bereich von 15 µm bis 300 µm liegt.

7. Kolbenring- und Kolben-Kombination gemäß einem der Ansprüche 1-6, wobei die erste Oberfläche (12a), die zweite Oberfläche (12b), die erste Vorsprungoberfläche (32a) und die zweite Vorsprungoberfläche (32b) mit einer Verschleißschutzbeschichtung versehen sind.

8. Kolbenring- und Kolben-Kombination gemäß einem der Ansprüche 1-7, wobei die Kolbenringnut (22) an einem oberen Ende des Kolbens (21) gelegen ist und an einem Kolbenboden (36) des Kolbens (21) oben offen ist.

9. Kolbenring- und Kolben-Kombination gemäß Anspruch 1, wobei im axialen Querschnitt ein Winkel (γ) zwischen der ersten Oberfläche (12a) und der zweiten Oberfläche (12b) im Bereich zwischen 105° und 150° liegt.

10. Kolbenring- und Kolben-Kombination gemäß Anspruch 1 oder 9, wobei eine axiale Höhe (h) des Kolbenrings (1) im Bereich 0,25 - 2 mal einer radialen Wandstärke (a) des Kolbenrings (1) liegt; wobei eine axiale Gesamthöhe (h_{g}) der Aussparung (10) im Bereich 0,5 - 0,7 mal der Höhe (h) des Kolbenrings (1) liegt; und wobei eine radiale Gesamttiefe (a_{g}) der Aussparung (10) im Bereich 0,2 - 0,7, vorzugsweise im Bereich 0,25 - 0,5, mal der Wandstärke (a) des Kolbenrings (1) liegt.

11. Kolbenring- und Kolben-Kombination gemäß Anspruch 1,9 oder 10, wobei die erste Oberfläche (12a) und die zweite Oberfläche (12b) mittels einer Abrundung ineinander übergehen.

12. Kolbenring- und Kolben-Kombination gemäß einem der vorstehenden Ansprüche 1 oder 9-11, wobei mindestens eine der ersten Oberfläche (12a) oder der zweiten Oberfläche (12b) mit einer Verschleißschutzschicht (14) versehen ist.

13. Kolbenring- und Kolben-Kombination gemäß einem der vorstehenden Ansprüche 1 oder 9-12, wobei die obere Ringflanke (8) mit einer Verschleißschutzbeschichtung (16) versehen ist.

14. Kolbenring und Kolben-Kombination gemäß Anspruch 1, wobei mindestens eine der ersten Vorsprungoberfläche (32a) oder der zweiten Vorsprungoberfläche (32b) mit einer Verschleißschutzbeschichtung (34) versehen ist.

## Claims

1. A piston ring and a piston combination comprising
A piston ring (1) having a running surface (2), an inner surface (4), a lower ring flank (6), and an upper ring flank (8);
wherein a recess (10), extending across the perimeter in the shape of an internal angle, is located at the transition between the inner surface (4) and the upper ring flank (8);
wherein the recess (10) defines a conical first surface (12a) and a conical second surface (12b) at the piston ring (1), wherein the first surface (12a) lies further outward, when viewed in the radial direction, and further above, when viewed in the axial direction, than the second surface (12b);
wherein, in an axial cross section, a first angle (α) between the axial direction and the first surface (12a) lies in the range between 10 ° and 50 °, and a second angle (β) between the radial direction and the second surface (12b) lies in the range between 5 ° and 30 °,
a piston (21) having a piston ring groove (22) having a groove bottom (24) and a lower groove flank (26), wherein a projection (30) is arranged at an upper end of the groove bottom (24) of the piston ring groove (22);
wherein the projection (30) has a conical first projection surface (32a) and a conical second projection surface (32b), wherein the first projection surface (32a) lies further outward, when viewed in the radial direction, and further above, when viewed in the axial direction, than the second projection surface (32b),
wherein, in an axial cross section, a third angle (αₖ) between the axial direction and the first projection surface (32a) lies in the range between 10 ° and 50 °, and a fourth angle (βₖ) between the radial direction and the second projection surface (12b) lies in the range between 5 ° and 30 °;
wherein the recess (10) and the projection (30) are designed such that, when the piston ring (1) is mounted in the piston ring groove (22), the projection (30) projects into the recess (10), the second surface (12b) extends parallel to the second projection surface (32b), and
the first surface (12a) extends parallel to the first projection surface (32a) or the first angle (α) between the axial direction and the first surface (12a) is greater than the third angle (αₖ) between the axial direction and the first projection surface (32a)
wherein, when the piston ring (1) is mounted in the piston ring groove (22) and the second surface (12b) contacts the second projection surface (32b), an axial distance (hₘ) exists between the first surface (12a), and the first projection surface (32a) and wherein the piston ring groove (22) additionally comprises an upper groove flank (28),
**characterized in that**
when the piston ring (1) is mounted in the piston ring groove (22) and the second surface (12b) contacts the second projection surface (32b), an axial distance (hₐₓ) exists between the upper ring flank (8) and the upper groove flank (28).

2. The piston ring and the piston combination according to claim 1, wherein, when the piston ring (1) is mounted in the piston ring groove (22) and the piston ring (1) contacts the lower groove flank (26), the first surface (12a) is spaced apart from the projection surface (32a) and the second surface (12b) is spaced apart from the second projection surface (32b).

3. The piston ring and the piston combination according to one of claims 1 or 2, wherein the axial distance (hₘ) is at least 45 µm.

4. The piston ring and the piston combination according to claim 3, wherein the axial distance (hₐₓ) lies in the range of 0.9 - 1.5 times the axial distance (hₘ) between the first surface (12a), and the first projection surface (32a)

5. The piston ring and the piston combination according to one of claims 1-4, wherein an inner edge line of the first surface (12a) has a greater radius than an inner edge line of the first projection surface (32a).

6. The piston ring and the piston combination according to claim 5, wherein the difference (aᵥ) of the radii of the inner edge line of the first surface (12a) and the inner edge line of the first projection surface (32a) lies in the range from 15 µm to 300 µm.

7. The piston ring and the piston combination according to one of claims 1-6, wherein the first surface (12a), the second surface (12b), the first projection surface (32a), and the second projection surface (32b) are provided with a wear protection coating.

8. The piston ring and the piston combination according to one of claims 1-7, wherein the piston ring groove (22) is situated in an upper end of the piston (21) and is open above to a piston crown (36) of the piston (21).

9. The piston ring and the piston combination according to claim 1, wherein in the axial cross section, an angle (γ) between the first surface (12a) and the second surface (12b) lies in the range between 105 ° and 150 °.

10. The piston ring and the piston combination according to one of claims 1 or 9, wherein an axial height (h) of the piston ring (1) lies in the range of 0.25-2 times a radial wall thickness (a) of the piston ring (1); wherein a total axial height (h_{g}) of the recess (10) lies in the range of 0.5-0.7 times the height (h) of the piston ring (1); and wherein a total radial depth (a_{g}) of the recess (10) lies in the range of 0.2-0.7, preferably in the range 0.25-0.5 times the wall thickness (a) of the piston ring (1).

11. The piston ring and the piston combination according to one of claims 1, 9 or 10, wherein the first surface (12a) and the second surface (12b) transition into one another by means of a rounding.

12. The piston ring and the piston combination according to one of claims 1 or 9-11, wherein at least one of the first surface (12a) or the second surface (12b) is provided with a wear protection layer (14).

13. The piston ring and the piston combination according to one of claims 1 or 9-12, wherein the upper ring flank (8) is provided with a wear protection coating (16).

14. The piston ring and the piston combination according to claim 1, wherein at least one of the first projection surface (32a) or the second projection surface (32b) is provided with a wear protection coating (34).

## Revendications

1. Combinaison de piston et de segment de piston comprenant un segment de piston (l) avec une surface de roulement (2), une surface intérieure (4), un flanc de segment inférieur (6) et un flanc de segment supérieur (8) ;
dans laquelle à la transition entre la surface intérieure (4) et le flanc de segment supérieur (8) se trouve un évidement s'étendant circonférentiellement (10) sous la forme d'un angle interne ;
dans laquelle l'évidement (10) définit une première surface conique (12a) et une deuxième surface conique (12b) sur le segment de piston (1), dans laquelle la première surface (12a) est située plus vers l'extérieur vue dans la direction radiale et située plus vers le haut vue dans la direction axiale que la deuxième surface (12b) ;
dans laquelle, dans une coupe transversale axiale, un premier angle (α) entre la direction axiale et la première surface (12a) est compris entre 10° et 50° et un deuxième angle (β) entre la direction radiale et la deuxième surface (12b) est compris entre 5° et 30°;
un piston (21) présentant une rainure de segment de piston (22) avec un fond de rainure (24) et un flanc de rainure inférieur (26), dans laquelle une protubérance (30) est disposée à une extrémité supérieure du fond de rainure (24) de la rainure de segment de piston (22) ;
dans laquelle la protubérance (30) présente une première surface de protubérance conique (32a) et une deuxième surface de protubérance conique (32b), dans laquelle la première surface de protubérance (32a) est située plus vers l'extérieur vue dans la direction radiale et est située plus vers le haut que la deuxième surface de protubérance (32b) vue dans la direction axiale ;
dans laquelle, dans une coupe transversale axiale, un troisième l'angle (αₖ) entre la direction axiale et la première surface de protubérance (32a) est compris entre 10° et 50° et un quatrième angle (βₖ) entre la direction radiale et la deuxième surface de protubérance (12b) est compris entre 5° et 30° ;
dans laquelle l'évidement (10) et la protubérance (30) sont agencés de sorte que lorsque le segment de piston (1) est monté dans la rainure de segment de piston (22), la protubérance (30) dépasse en saillie dans l'évidement (10), la deuxième surface (12b) s'étend parallèlement à la deuxième surface de protubérance (32b) et la première surface (12a) s'étend parallèlement à la première surface de protubérance (32a) ou le premier angle (α) entre la direction axiale et la première surface (12a) est supérieur au troisième angle (αₖ) entre la direction axiale et la première surface de protubérance (32a), dans laquelle lorsque le segment de piston (1) est monté dans la rainure de segment de piston (22) et la deuxième surface (12b) vient reposer sur la deuxième surface de protubérance (32b), il s'établit une distance axiale (hₘ) entre la première surface (12a) et la première surface de protubérance (32a), et dans laquelle la rainure de segment de piston (22) comprend en outre un flanc de rainure supérieur (28),
**caractérisé en ce que**, lorsque le segment de piston (1) est monté dans la rainure de segment de piston (22) et que la deuxième surface (12b) est en butée contre la deuxième surface de protubérance (32b), il s'établit une distance axiale (hₐₓ) entre la flanc de segment supérieur (8) et le flanc de rainure supérieur (28) .

2. Combinaison de segment de piston et de piston selon la revendication 1, dans laquelle lorsque le segment de piston (1) est monté dans la rainure de segment de piston (22) et le segment de piston (l) bute contre le flanc de rainure inférieur (26), la première surface (12a) est espacée de la surface de protubérance (32a) et la deuxième surface (12b) est espacée de la deuxième surface de protubérance (32b).

3. Combinaison de segment de piston et de piston selon la revendication 1 ou 2, dans laquelle la distance axiale (hₘ) est d'au moins 45 µm.

4. Combinaison de segment de piston et de piston selon la revendication 3, dans laquelle la distance axiale (hₐₓ) est dans la plage de 0,9 à 1,5 fois la distance axiale (hₘ) entre la première surface (12a) et la première surface de protubérance (32a).

5. Combinaison de segment de piston et de piston selon une quelconque des revendications 1 à 4, dans laquelle une ligne de bord interne de la première surface (12a) a un rayon plus grand qu'une ligne de bord interne de la première surface de protubérance (32a).

6. Combinaison segment de piston et piston selon la revendication 5, dans laquelle la différence (aᵥ) des rayons de la ligne de bord interne de la première surface (12a) et de la ligne de bord interne de la première surface de protubérance (32a) est dans la plage de 15 µm à 300 µm.

7. Combinaison de segment de piston et de piston selon une quelconque des revendications 1 à 6, dans laquelle la première surface (12a), la deuxième surface (12b), la première surface de protubérance (32a) et la deuxième surface de protubérance (32b) sont pourvues d'un revêtement anti-usure.

8. Combinaison de segment de piston et de piston selon une quelconque des revendications 1 à 7, dans laquelle la rainure de segment de piston (22) est située à une extrémité supérieure du piston (21) et est ouverte au sommet à une tête de piston (36) du piston (21).

9. Combinaison de segment de piston et de piston selon la revendication 1, **caractérisé en ce qu'**en coupe axiale un angle (γ) entre la première surface (12a) et la deuxième surface (12b) est compris entre 105° et 150°.

10. Combinaison de segment de piston et de piston selon la revendication 1 ou 9, dans laquelle une hauteur (h) du segment de piston (1) est comprise dans la plage de 0,25 à 2 fois une épaisseur de paroi radiale (a) du segment de piston (1); dans laquelle une hauteur axiale globale (h_{g}) de l'évidement (10) est comprise dans la plage de 0,5 à 0,7 fois la hauteur (h) du segment de piston (1) ; et dans laquelle une profondeur radiale globale (a_{g}) de l'évidement (10) est comprise dans la plage de 0,2 à 0,7, de préférence dans la plage de 0,25 à 0,5 fois l'épaisseur de paroi (a) du segment de piston (1).

11. Combinaison de segment de piston et de piston selon la revendication 1, 9 ou 10, dans laquelle la première surface (12a) et la deuxième surface (12b) se rejoignent au moyen d'un arrondi.

12. Combinaison de segment de piston et de piston selon une quelconque des revendications précédentes 1 ou 9-11, dans laquelle au moins une de la première surface (12a) ou de la deuxième surface (12b) est pourvue d'une couche de protection contre l'usure (14).

13. Combinaison de segment de piston et de piston selon une quelconque des revendications précédentes1 ou 9-12, dans laquelle le flanc de segment supérieur (8) est pourvu d'un revêtement anti-usure (16).

14. Combinaison de segment de piston et de piston selon la revendication 1, dans laquelle au moins une parmi la première surface de protubérance (32a) ou la deuxième surface de protubérance (32b) est pourvue d'un revêtement anti-usure (34).
